# EUROPÄISCHE PATENTSCHRIFT

(11) **EP 0 676 245 B1**
(45) Veröffentlichungstag und Bekanntmachung des Hinweises auf die Patenterteilung: **12.08.1998**
(21) Anmeldenummer: 95102863.8
(22) Anmeldetag: 01.03.1995
(51) Int. Cl.: B05B 9/08, B65D 83/14, B01F 5/06, B29B 7/74

(54) **Montageschaum-pistole**
Assembly foam dispensing gun
Pistolet de distribution de mousse de montage

(30) Priorität: 09.04.1994 DE 4412282
(43) Veröffentlichungstag der Anmeldung: 11.10.1995
(73) Patentinhaber: C. EHRENSPERGER AG, CH-8712 Stäfa ZH (CH)
(72) Erfinder: Kopp, Volker, CH-8133 Esslingen (CH)
(74) Vertreter: Kinkelin, Ulrich, Dipl.-Ing.

(56) Entgegenhaltungen:
- CH-A- 366 518
- DE-A- 3 630 992
- DE-A- 3 710 395
- DE-A- 3 912 920
- DE-C- 3 606 018
- GB-A- 2 075 852
- US-A- 5 271 537

## Beschreibung

Die Erfindung betrifft eine Pistole gemäß dem Oberbegriff des Anspruchs 1. Eine solche Vorrichtung ist aus der US-A-5,271,537 bekannt.

Eine weitere, jedoch nicht gattungsgemäße Vorrichtung ist durch die Anmelder-eigene Montagepistole System Pageris bekannt, die für Polyurethan-Montageschaum-Erzeugung verwendet wird. Bei solchen Pistolen wird auf deren Adapter eine Montageschaum-Dose aufgeschraubt. Man zieht dann an einem Abzugshebel. Innerhalb des Düsenrohrs wird dann eine Düsennadel einwärts gezogen und aus der Düse tritt der Schaum aus. Der Druckunterschied zwischen dem Doseninhalt und der Umgebung liegt bei 2 bis 12 Bar. Der Druckunterschied fällt bis zur Düse sukzessive ab und wird dann in der Umgebung schlagartig zu Null. Die Schäume müssen genügend feinporig sein. Man weiß aus Erfahrung, welche Substanz in die Dosen gefüllt werden muß, damit am Ende der richtige Schaum entsteht, und zwar ohne Mischstrecke und Reaktionstrecke.

Darüber hinaus ist es bekannt, z.B. gemäß der deutschen Patentanmeldung P4313319.3, solche Montageschäume herzustellen. Vorrichtungsmäßig wird dabei auf eine Druckdose ein sogenannter Winkeladapter aufgeklipst, der eine längere Misch- und Reaktionsstrecke in Gestalt eines Kunststoffröhrchens aufweist. Da man hier eine Misch- und Reaktionsstrecke hat, ist der Doseninhalt anders als bei den für die Pistolen verwendeten Dosen. Zudem ist die Rezeptur für bekannte Pistolenschäume aufwendiger, teurer und sehr viel kritischer als diejenige, die für Adapterschäume verwendet wird.

Man muß also zwei unterschiedliche Doseninhalte herstellen und braucht eine doppelte Lagerhalterung.

Die Zweigleisigkeit, die bei der Schaumformulierung notwendig ist, verhindert, daß für die Pistolenschäume bestimmte, an sich wünschenswerte, insbesondere umweltfreundlichere Stoffe verwendet werden können.

Aufgabe der Erfindung ist es, eine Pistole der eingangs genannten Art anzugeben, die es gestattet, sowohl für die Adapter als auch die Pistolen die gleichen Schäume zu verwenden.

Außerdem soll es mit dem gleichen Schaum möglich sein, die Schaumqualität zu verändern, d.h. feinzelligere Schäume oder grobzelligere Schäume herzustellen.

Erfindungsgemäß wird diese Aufgabe durch eine Pistole gemäß dem Anspruch 1 gelöst.

Nachfolgend wird ein bevorzugtes Ausführungsbeispiel der Erfindung beschrieben. In der Zeichnung zeigen:
- Fig. 1: einen schematischen, teilweisen Längsschnitt der Pistole, auf die Hälfte verkleinert,
- Fig. 2: einen Längsschnitt durch die abgebrochene Düsennadel in doppelter Vergrößerung,
- Fig. 3: einen Längsschnitt durch die Düsennadel und das Düsenrohr in deren vorderen Bereich im geschlossenen Zustand bei nicht gezogenem Abzugshebel,
- Fig. 4: einen Schnitt wie Fig. 3, jedoch mit teilweise gezogenem Abzugshebel,
- Fig. 5: eine Darstellung wie Fig. 4, jedoch mit voll gezogenem Abzugshebel.

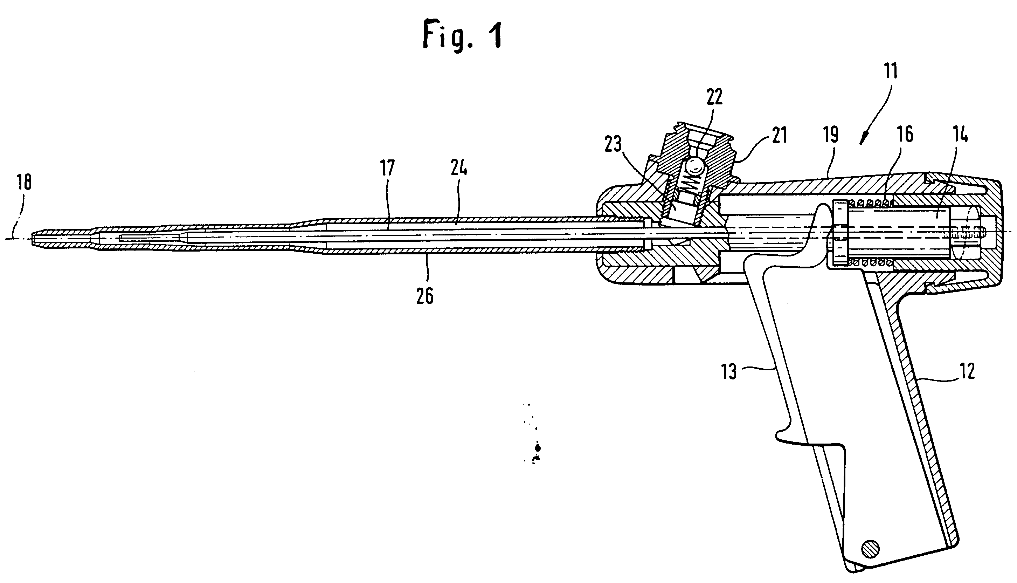

Eine Pistole 11 hat einen Handgriff 12 mit einem Abzugshebel 13, der in Fig. 1 ganz gezogen ist. Dieser wirkt auf eine Federbüchse 14, die hier in ihrer hinteren Lage gezeichnet ist und ohne Betätigung des Abzugshebels 13 durch eine Wendelfeder 16 nach links in Schließlage gedrückt wird. Bewegungsmäßig starr mit der Federbüchse 14 ist eine Nadel 17 verbunden, die koaxial zu einer geometrischen Längsachse 18 ist, zu der auch die Federbüchse 14 und die Wendelfeder 16 koaxial sind. Auf dem Korpus 19 der Pistole ist ein Adapter 21 vorgesehen, auf den eine nicht dargestellte Schaumdose, z.B. gemäß der deutschen Patentanmeldung P 43 13 833.0, aufgeschraubt werden kann. Bei aufgeschraubter Schaumdose wird eine Ventilkugel 22 gegen Federkraft nach innen gedrückt, und die Flüssigkeit aus der Dose gelangt noch unaufgeschäumt in einen Hohlraum 23. Dieser wird unten von der Nadel 17 durchquert. Zwischen dem Korpus 19 und dem Umfang der Nadel 17 befindet sich rechts, und nicht dargestellt, eine gasdichte Dichtung. Der Hohlraum 23 erstreckt sich nach links in Gestalt eines zur geometrischen Längsachse 18 koaxialen ringförmigen Ringraums 24 weiter, der nach außen zu gasdicht durch ein Düsenrohr 26 begrenzt wird, das rechts gasdicht und starr sowie nach rechts offen mit dem Korpus 19 verbunden ist. Selbst bei ganz gezogenem Abzugshebel 13 ist der Druckabfall vom Eingang des Hohlraums 23 bis zu dessen Ausgang und vom rechten Eingang des Ringraums 24 bis zu seinem linken Ende vernachlässigbar klein, weil der Strömungswiderstand in diesem Bereich ebenfalls klein ist.

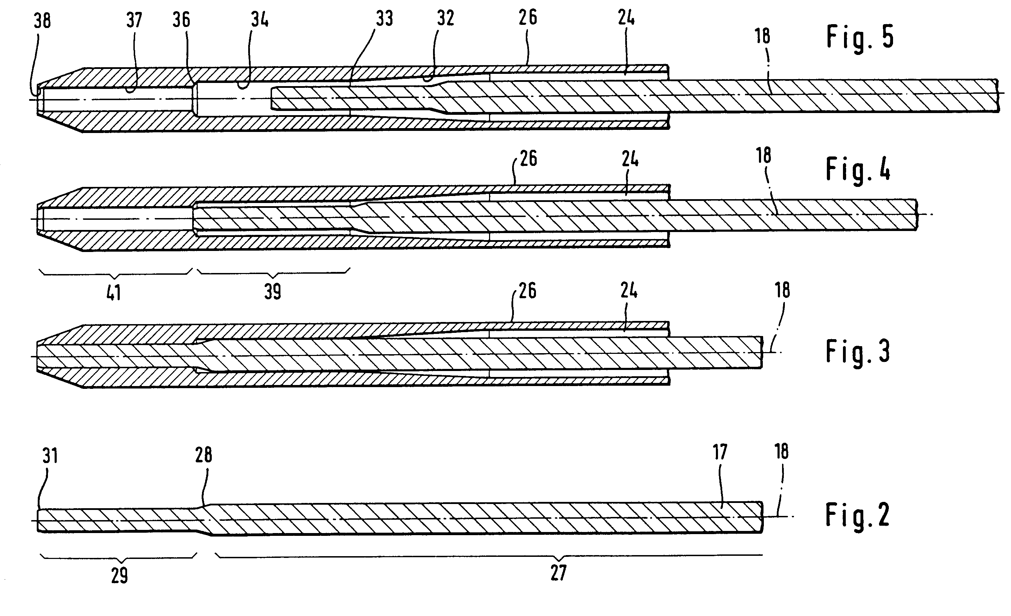

Die Nadel 17 hat in dem in Fig. 2 rechten Bereich 27 einen gleichbleibenden kreiszylindrischen Durchmesser von 4 mm. Es folgt dann ein koaxialer Verjüngungskonus 28, der sich über die vergleichsweise kurze Strecke von 2mm erstreckt und nach dem der Durchmesser der Nadel 17 von 4 mm auf 3 mm reduziert ist. Dieser Bereich 29 ist rund 2 cm lang und kreiszylindrisch gedreht und gerieben. Daran schließt sich ein sehr spitzer Kegel 31 an, der gedreht und gerieben ist. Dieser ist etwa 0,5 mm lang und damit wesentlich kürzer als bei der bekannten Düsennadel.

Im Düsenrohr 26 beginnt nach dem Ringraum 24 ein Verengungskegel 32, der koaxial zur geometrischen Längsachse 18 ist, glatt kreiskegelförmige Gestalt hat und sich unter einem sehr spitzen Winkel von ca. 3° erstreckt. Dementsprechend nimmt nach links die Wandstärke des Düsenrohrs 26 zu. Der Verengungskegel 32 ist etwa 1,7 cm lang. Links von seinem Ende 33 erstreckt sich eine koaxiale kreiszylindrische Bohrung 34. Die Bohrung 34 hat einen durchgehend gleichbleibenden Durchmesser von 4,5 mm, ist 1,9cm lang und endet links in einem sehr kurzen Verjüngungskonus 36. Die sich daran anschließende kreiszylindrische koaxiale Bohrung 37 hat einen Durchmesser von 3 mm, ist 1,9 cm lang, also im wesentlichen gleich lang wie die Bohrung 34, und endet links mit einem weiteren, kurzen, koaxialen Verjüngungskonus 38. Wie die Zeichnung zeigt, wird wegen der stufenweisen Verengungen die Wandstärke des Düsenrohrs 26 nach links zu immer dicker.

Den Sinn der unterschiedlichen Gestaltungen erkennt man aus dem Vergleich der Fig. 3, 4 und 5: Gemäß Fig. 3 ist das Düsenrohr 26 geschlossen, weil der 15°-Kegel 31 im Verjüngungskonus 38 sitzt und gasdicht dichtet, und weil der Bereich 29 in der Bohrung 37 mit enger Spielpassung sitzt und eine Art Vordichtung gibt, hauptsächlich aber das dünnere Ende der Düsennadel 17 lagert.

Im Zustand gemäß Fig. 4 liegt der Verjüngungskonus 28 im engsten Bereich des Verjüngungskegels 32 und läßt wenig Schaum in eine Mischstrecke 39 kleinen Volumens gelangen, welcher Schaum - wohl mehr in flüssiger Form - am 15°-Kegel 31 und dem Verjüngungskonus 36 vorbei in die Mischstrecke 41 gelangen kann und dort praktisch voll expandieren kann.

Gemäß Fig. 5 ist die Nadel 17 fast ganz, aber noch nicht voll nach rechts gezogen. Aus dem Ringraum 24 gelangt, geleitet durch den Verjüngungskegel 32, an dem sich nun ziemlich weit rechts befindlichen Verjüngungskonus 28 vorbei, in die zur Hälfte ganz freie Mischstrecke 39 die Flüssigkeit, die sich dort expandieren kann und die dann für die weitere Expansion die vollständig freie, aber im Durchmesser etwas kleinere Mischstrecke 41 zur Verfügung hat.

Je weiter man die Nadel 17 nach rechts zieht, desto mehr aufschäumbare Flüssigkeit strömt aus dem Ringraum 24 nach links und hat auch umso mehr Mischstrecke 39, 41 zur Verfügung.

Die Erfindung ist zahlreicher Variation fähig. Der Durchmesser der Nadel 17 kann auch zwischen 3 bis 6 mm liegen, mit entsprechender Anpassung der anderen Maße.

Die auf Seite 3, Absatz 2 angegebenen Maße sind lediglich Maße eines bevorzugten Ausführungsbeispiels. Sie können variieren. Insbesondere können sich die dort genannten 4 mm um ± 50% ändern. Ebenfalls können sich die dort genannten 3 mm um ± 50% ändern, und auch die dort genannten 2 cm können sich um ± 50% ändern. Schließlich können sich die 0,5 mm ebenfalls um ± 50% ändern.

## Patentansprüche

1. Pistole zur Erzeugung von Montageschaum,
mit einem Abzugshebel (13),
mit einem Düsenrohr (26),
mit einer Düsennadel (17) koaxial im Düsenrohr (26), die durch einen Kraftspeicher (16) in ihre Schließlage gedrängt wird,
mit einer Koppelvorrichtung (14, 16) zwischen Abzugshebel (13) und Düsennadel (17), vermittels der eine bestimmte Lage des Abzugshebels einer bestimmten Lage der Düsennadel entspricht,
mit einem zumindest flüssigkeitsdichten, kegeligen Sitz (38) zwischen dem Endbereich der Düsennadel (17) und dem Endbereich des Düsenrohrs (26) bei nicht betätigtem Abzugshebel (13),
und mit einem Ringraum (24) zwischen Düsennadel (17) und Düsenrohr (26), wobei stromauf vom kegeligen Sitz (38) eine Misch- und Reaktionsstrecke (39, 41) zwischen der Innenwand des Düsenrohrs (26) und der Außenseite der Düsennadel (17) vorgesehen ist,
dadurch gekennzeichnet,
daß stromauf von der Misch- und Reaktionsstrecke (39, 41) und stromab von dem Ringraum (24) ein Verengungsraum (32) vorgesehen ist, dessen Querschnitt in Richtung kegeliger Sitz (38) abnimmt.

2. Pistole nach Anspruch 1, dadurch gekennzeichnet, daß die Misch- und Reaktionsstrecke (39, 41) mindestens zwei Teilstrecken (39, 41)
umfaßt, von denen die erste und im Querschnitt kleinere (41) stromauf vom kegeligen Sitz (38) und daran anschließend die im Querschnitt größere (39) folgt.

3. Pistole nach Anspruch 2, dadurch gekennzeichnet, daß die Querschnitte der Teilstrecken (39, 41) kreiszylindrisch sind.

4. Pistole nach Anspruch 2, dadurch gekennzeichnet, daß der Endbereich (29) der Düsennadel (17) zumindest bis in die zweite Teilstrecke (39) hinein bewegbar ist.

5. Pistole nach Anspruch 2, dadurch gekennzeichnet, daß die Querschnitte sich wie 1:2,25 ± 80 % verhalten.

6. Pistole nach Anspruch 2, dadurch gekennzeichnet, daß die erste Misch- und Reaktionsstrecke (41) einen Durchmesser entsprechend einem sehr engen Spielsitz zur Düsennadel (17) hin hat, wenn die Düsennadel (17) in ihrer Schließlage ist.

7. Pistole nach Anspruch 3, dadurch gekennzeichnet, daß die zweite Misch- und Reaktionsstrecke (39) einen Durchmesser entsprechend einem sehr weiten Spielsitz zur Düsennadel (17) hin hat, wenn die Düsennadel (17) in ihrer Schließlage ist.

8. Pistole nach Anspruch 1, dadurch gekennzeichnet, daß die Düsennadel (17) zumindest zwei Bereiche (27, 29) unterschiedlichen Durchmessers hat, von denen der eine im Durchmesser kleinere (29) in seiner Länge der Länge der Misch- und Reaktionsstrecke (41) entspricht.

9. Pistole nach Anspruch 1, dadurch gekennzeichnet, daß der kegelige Sitz (31) der Düsennadel (17) zumindest teilweise bis in die zweite Misch- und Reaktionsstrecke (39) zurückziehbar ist.

10. Pistole nach Anspruch 1, dadurch gekennzeichnet, daß die erste Misch- und Reaktionsstrecke (41) eine Länge von 2 cm ± 50 % hat.

11. Pistole nach Anspruch 1, dadurch gekennzeichnet, daß die zweite Misch- und Reaktionsstrecke (39) eine Länge von 1 cm ± 50 % hat.

12. Pistole nach Anspruch 1, dadurch gekennzeichnet, daß die zweite Misch- und Reaktionsstrecke (39) eine Länge von 4 cm ± 50 % hat.

13. Pistole nach Anspruch 1, dadurch gekennzeichnet, daß die Düsennadel (17) auf einer Länge entsprechend der ersten Misch- und Reaktionsstrecke (41) einen kreiszylindrischen, im Durchmesser kleineren ersten Abschnitt (29) hat, der nach einem kurzen Kegelansatz (38) in einen zweiten, langen, im Durchmesser größeren, kreiszylindrischen Abschnitt (27) übergeht.

14. Pistole nach Anspruch 1, dadurch gekennzeichnet, daß das Düsenrohr (26) im Bereich der ersten Misch- und Reaktionsstrecke (41) einen ersten, kreiszylindrischen Abschnitt (37) hat, der stromab bis zum kegeligen Sitz (38) reicht.

15. Pistole nach Ansprüchen 1 oder 2, dadurch gekennzeichnet, daß das Düsenrohr (26) im Bereich der zweiten Misch- und Reaktionsstrecke (39) einen zweiten kreiszylindrischen Abschnitt (34) hat, der stromauf von der ersten Misch- und Reaktionsstrecke (41) angeordnet ist und einen größeren Durchmesser als diese hat.

16. Pistole nach Anspruch 14, dadurch gekennzeichnet, daß der erste Abschnitt (41) einen Durchmesser von 3 mm ± 50 % hat.

17. Pistole nach Anspruch 15, dadurch gekennzeichnet, daß der zweite Abschnitt (39) einen Durchmesser von 4,5 mm ± 50 % hat.

18. Pistole nach Anspruch 15, dadurch gekennzeichnet, daß stromauf von der zweiten Misch- und Reaktionsstrecke (39) als eine äußere Begrenzung des Verengungsraums im Düsenrohr eine im Durchmesser kleiner werdende Wand (32) vorgesehen ist.

19. Pistole nach Anspruch 18, dadurch gekennzeichnet, daß die Wand (32) einem Kreiskegel mit sehr spitzem Winkel folgt.

20. Pistole nach Anspruch 1, dadurch gekennzeichnet, daß der Hub des Abzugshebels einer Bewegung der Düsennadel von 2 cm ± 50 % entspricht.

## Claims

1. Gun for producing assembly foam, having a trigger lever (13), having a nozzle tube (26), having a nozzle needle (17) coaxially in the nozzle tube (26), said needle being forced into its closed position by a force accumulator (16), having a coupling device (14, 16) between the trigger lever (13) and nozzle needle (17), by means of which device a certain position of the trigger lever corresponds to a certain position of the nozzle needle, having an at least liquid-tight, conical seat (38) between the end region of the nozzle needle (17) and the end region of the nozzle tube (26) in the non-actuated state of the trigger lever (13), and having an annular space (24) between the nozzle needle (17) and nozzle tube (26), it being the case that, upstream of the conical seat (38), a mixing and reaction section (39, 41) is provided between the inner wall of the nozzle tube (26) and the outside of the nozzle needle (17), characterized in that provided upstream of the mixing and reaction section (39, 41), and downstream of the annular space (24), is a narrowing space (32), of which the cross-section decreases in the direction of the conical seat (38).

2. Gun according to Claim 1, characterized in that the mixing and reaction section (39, 41) comprises at least two sub-sections (39, 41), of which the first sub-section (41), which has a smaller cross-section, follows upstream of the conical seat (38) and the cross-sectionally larger sub-section (39) then follows said conical seat (38).

3. Gun according to Claim 2, characterized in that the cross-sections of the sub-sections (39, 41) are circular-cylindrical.

4. Gun according to Claim 2, characterized in that the end region (29) of the nozzle needle (17) can be moved at least into the second sub-section (39).

5. Gun according to Claim 2, characterized in that the cross-sections are in a ratio of 1:2.25 ± 80%.

6. Gun according to Claim 2, characterized in that the first mixing and reaction section (41) has a diameter corresponding to a very tight fit in the direction of the nozzle needle (17) when the latter is in its closed position.

7. Gun according to Claim 3, characterized in that the second mixing and reaction section (39) has a diameter corresponding to a very loose fit in the direction of the nozzle needle (17) when the latter is in its closed position.

8. Gun according to Claim 1, characterized in that the nozzle needle (17) has at least two regions (27, 29) of different diameters, of which the smaller-diameter region (29) corresponds, in terms of length, to the length of the mixing and reaction section (41).

9. Gun according to Claim 1, characterized in that the conical seat (31) of the nozzle needle (17) can be drawn back at least partially into the second mixing and reaction section (39).

10. Gun according to Claim 1, characterized in that the first mixing and reaction section (41) has a length of 2 cm ± 50%.

11. Gun according to Claim 1, characterized in that the second mixing and reaction section (39) has a length of 1 cm ± 50%.

12. Gun according to Claim 1, characterized in that the second mixing and reaction section (39) has a length of 4 cm ± 50%.

13. Gun according to Claim 1, characterized in that, over a length corresponding to the first mixing and reaction section (41), the nozzle needle (17) has a first circular-cylindrical section (29), which is of smaller diameter and, following a short cone extension (28), merges into a second, long circular-cylindrical section (27), which has a larger diameter.

14. Gun according to Claim 1, characterized in that, in the region of the first mixing and reaction section (41), the nozzle tube (26) has a first circular-cylindrical section (37), which extends downstream as far as the conical seat (38).

15. Gun according to Claim 1 or 2, characterized in that, in the region of the second mixing and reaction section (39), the nozzle tube (26) has a second circular-cylindrical section (34), which is arranged upstream of the first mixing and reaction section (41) and has a larger diameter than the latter.

16. Gun according to Claim 14, characterized in that the first section (41) has a diameter of 3 mm ± 50%.

17. Gun according to Claim 15, characterized in that the second section (39) has a diameter of 4.5 mm ± 50%.

18. Gun according to Claim 15, characterized in that provided upstream of the second mixing and reaction section (39), as an outer boundary of the narrowing space in the nozzle tube, is a wall (32) which has a decreasing diameter.

19. Gun according to Claim 18, characterized in that the wall (32) corresponds to a circular cone with a very acute angle.

20. Gun according to Claim 1, characterized in that the displacement of the trigger lever corresponds to a movement of the nozzle needle of 2 cm ± 50%.

## Revendications

1. Pistolet de production de mousse de montage, comportant un levier de détente (13), une buse d'injection (26), une aiguille d'injection (17) coaxiale dans la buse d'injection (26), qui est poussée dans sa position de fermeture par un accumulateur d'énergie (16), un dispositif d'accouplement (14, 16) entre le levier de détente (13) et l'aiguille d'injection (17), au moyen duquel une position déterminée du levier de détente correspond à une position déterminée de l'aiguille d'injection, un siège conique (38) au moins étanche aux fluides entre la zone d'extrémité de l'aiguille d'injection (17) et la zone d'extrémité de la buse d'injection (26) lorsque le levier de détente (13) n'est pas actionné, et un espace annulaire (24) entre l'aiguille d'injection (17) et la buse d' injection (26), une section de mélange et de réaction (39, 41) étant prévue en amont du siège conique (38), entre la paroi interne de la buse d'injection (26) et le côté externe de l'aiguille d'injection (17), caractérisé en ce qu'en amont de la section de mélange et de réaction (39, 41) et en aval de l'espace annulaire (24) est prévu un espace de rétrécissement (32), dont la section transversale diminue dans la direction du siège conique (38).

2. Pistolet selon la revendication 1, caractérisé en ce que la section de mélange et de réaction (39, 41) comprend au moins deux sections partielles (39, 41), dont la première, et en section transversale, la plus petite (41), est en amont du siège conique (38), suivie de la plus grande (39) en section transversale.

3. Pistolet selon la revendication 2, caractérisé en ce que les sections transversales des sections partielles (39, 41) sont cylindriques circulaires.

4. Pistolet selon la revendication 2, caractérisé en ce que la zone d'extrémité (29) de l'aiguille d'injection (17) est déplaçable vers l'intérieur au moins jusque dans la deuxième section partielle (39).

5. Pistolet selon la revendication 2, caractérisé en ce que les sections transversales sont dans un rapport de 1 : 2,25 ± 80%.

6. Pistolet selon la revendication 2, caractérisé en ce que la première section de mélange et de réaction (41) a un diamètre correspondant à un ajustement avec jeu très étroit avec l'aiguille d'injection (17), quand l'aiguille d'injection (17) est dans sa position de fermeture.

7. Pistolet selon la revendication 3, caractérisé en ce que la deuxième section de mélange et de réaction (39) a un diamètre correspondant à un ajustement avec jeu très large avec l'aiguille d'injection (17) lorsque l'aiguille d'injection (17) est dans sa position de fermeture.

8. Pistolet selon la revendication 1, caractérisé en ce que l'aiguille d'injection (17) a au moins deux zones (27, 29) de diamètres différents, dont l'une (29), de diamètre plus petit, a une longueur correspondant à la longueur de la section de mélange et de réaction (41).

9. Pistolet selon la revendication 1, caractérisé en ce que le siège conique (31) de l'aiguille d'injection (17) peut être rétracté au moins partiellement jusque dans la deuxième section de mélange et de réaction (39).

10. Pistolet selon la revendication 1, caractérisé en ce que la première section de mélange et de réaction (41) a une longueur de 2 cm ± 50%.

11. Pistolet selon la revendication 1, caractérisé en ce que la deuxième section de mélange et de réaction (39) a une longueur de 1 cm ± 50%.

12. Pistolet selon la revendication 1, caractérisé en ce que la deuxième section de mélange et de réaction (39) a une longueur de 4 cm ± 50%.

13. Pistolet selon la revendication 1, caractérisé en ce que l'aiguille d'injection (17), sur une longueur correspondant à la première section de mélange et de réaction (41), a une première portion (29) de diamètre plus petit, cylindrique circulaire, qui se prolonge après un court épaulement conique (38), par une deuxième portion (27) longue et cylindrique circulaire, de plus grand diamètre.

14. Pistolet selon la revendication 1, caractérisé en ce que la buse d'injection (26), dans la zone de la première section de mélange et de réaction (41), a une première portion cylindrique circulaire (37), qui s'étend, dans la direction aval, jusqu'au siège conique (38).

15. Pistolet selon les revendications 1 ou 2, caractérisé en ce que la buse d'injection (26), dans la zone de la deuxième section de mélange et de réaction (39), a une deuxième portion cylindrique circulaire (34), qui est disposée en amont de la première section de mélange et de réaction (41) et qui a un plus grand diamètre que celle-ci.

16. Pistolet selon la revendication 14, caractérisé en ce que la première portion (41) a un diamètre de 3 mm ± 50%.

17. Pistolet selon la revendication 15, caractérisé en ce que la deuxième portion (39) a un diamètre de 4,5 mm ± 50%.

18. Pistolet selon la revendication 15, caractérisé en ce qu'en amont de la deuxième section de mélange et de réaction (39), il est prévu, en tant que limitation extérieure de l'espace de rétrécissement dans la buse d'injection, une paroi (32) dont le diamètre diminue.

19. Pistolet selon la revendication 18, caractérisé en ce que la paroi (32) suit un cône circulaire d'angle très pointu.

20. Pistolet selon la revendication 1, caractérisé en ce que la course du levier de détente correspond à un déplacement de l'aiguille d'injection de 2 cm ± 50%.
